# FASCICULE DE BREVET EUROPEEN

(11) **EP 0 928 284 B1**
(45) Date de publication et mention de la délivrance du brevet: **26.11.2003**
(21) Numéro de dépôt: 98935074.9
(22) Date de dépôt: 01.07.1998
(51) Int. Cl.: C03B 29/08

(54) **FOUR A ROULEAUX POUR LE CHAUFFAGE DE VITRAGES**
ROLLENOFEN ZUM ERHITZEN VON GLASSCHEIBEN
ROLLER-HEARTH KILN FOR HEATING GLAZING SHEETS

(30) Priorité: 05.07.1997 DE 19728787
(43) Date de publication de la demande: 14.07.1999
(73) Titulaire: SAINT-GOBAIN GLASS FRANCE, 92400 Courbevoie (FR)
(72) Inventeur: BECKER, Guido, D-52078 Aachen (DE)
(74) Mandataire: Renous Chan, Véronique
(86) Numéro de dépôt international: FR9801407
(87) Numéro de publication internationale: WO99002458

(56) Documents cités:
- EP-A- 0 721 922
- WO-A-98/03439
- DE-A- 2 741 098
- DE-A- 4 010 280
- DE-A- 4 336 364
- GB-A- 2 083 456
- US-A- 4 336 442

## Description

La présente invention concerne un four à rouleaux pour le chauffage de vitrages à leur température de ramollissement.

Des fours à rouleaux pour le chauffage de vitrages sont connus dans différentes formes de réalisation. Ils sont utilisés lorsque les vitrages doivent être bombés ou trempés dans des installations prévues en aval ou lorsque des émaux appliqués sur les vitrages doivent être cuits. En l'occurrence, les vitrages sont généralement chauffés par rayonnement, en particulier par des résistances électriques. Les fours à rouleaux peuvent être conçus comme des fours continus ou comme des fours à mouvement oscillant des vitrages.

Lorsque les vitrages ne peuvent pas être chauffés de manière très uniforme sur les deux faces, des déformations convexes ou concaves du vitrage pendant le processus de chauffage sont inévitables. En l'occurrence, le vitrage se déforme sur la face la plus chauffée et prend une forme convexe. Le risque de telles déformations est particulièrement marqué lorsque les vitrages sont pourvus d'un revêtement superficiel. Lorsque les vitrages revêtus sont chauffés, la face revêtue se trouve en règle générale au-dessus, vu que, suivant le type de revêtement, ce dernier pourrait sinon être endommagé lors du transport sur les rouleaux. Les couches de revêtement peuvent consister en couches absorbant le rayonnement thermique, comme c'est le cas par exemple des encres à cuire, ou en couches réfléchissant le rayonnement, telles que celles utilisées comme couches de protection thermique, ou comme couches de protection solaire. Alors que, dans le premier cas, le dessus du vitrage présent dans le four est chauffé davantage par la chaleur rayonnante, dans le second cas, il reste nettement plus froid étant donné que le rayonnement thermique est réfléchi par la couche. Par conséquent, les vitrages se déforment, dans ces cas, dans des directions opposées.

vu qu'il est particuliérement difficile, dans le cas de vltrages pourvus d'une couche superficielle réfléchissant la chaleur, de chauffer le vitrage, uniformément et sans fléchissements gênants, par la chaleur rayonnante, des fours à rouleaux chauffant les vitrages par convection ont été mis au point. De tels fours à convection sont par exemple connus de par les documents DE 40 10 280 A1 et DE 43 36 364 A1. Le DE 4010280 A1 enseigne le chauffage de plaques de leurs deux côtés par convection. Le GB 2082456 A enseigne le chauffage de feuilles de verre convoyées sur des rouleaux, la face supérieure desdites feuilles étant soumises à un chauffage par conduction, convection et radiations, l'air au-dessus desdites faces supérieures étant brassé selon un régime turbulent. Le WO 98/03439 A, appartenant à l'état de la technique visé à l'Article 54(3) CBE, enseigne le chauffage de plaques de verre par des réslstances chauffantes placées au-dessus et au-dessous desdites plaques, des buses de soufflage étant par ailleurs également placées en dessous des plaques.

Dans le cas des fours à convection connus, les vitrages sont chauffés sur les deux faces par soufflage au moyen d'un gaz chaud. A cette fin, des ailettes formant buses de soufflage sont disposées, aussi bien au-dessus qu'en dessous du plan de transport des vitrages, transversalement à la direction de déplacement des vitrages et débouchent juste au-dessus et juste en dessous du plan de transport. Grâce à ces ailettes formant buses de soufflage, les vitrages sont soumis à un soufflage d'air chaud qui, par exemple, est chauffé, par des résistances de chauffage électriques installées dans les canaux d'écoulement, à une température pouvant atteindre environ 700'C. Des fours à convection de ce type sont relativement souples en ce qui concerne la régulation de température de l'air de soufflage chaud. Ils permettent un chauffage uniforme même lorsque les vitrages sont revêtus sur une face.

Dans le cas des fours à convection du type connu, les ailettes formant buses de soufflage sont disposées entre les rouleaux de transport dans la partie inférieure du four, une distance suffisamment grande devant subsister entre les ailettes formant buses de soufflage et les rouleaux de transport, afin de permettre l'écoulement de l'air chaud. Cela a pour conséquence que les rouleaux de transport présentent entre eux une distance relativement grande. De ce fait, les distances entre les lignes de soutien des rouleaux de transport sont elles-mêmes relativement grandes. Le risque que les vitrages se déforment sous l'effet de leur propre poids lorsqu'ils atteignent leur température de ramollissement augmente particulièrement lorsque les vitrages sont minces. Par ailleurs, le poids propre ne peut pas être compensé par les flux de gaz dirigés, par le bas, sur le vitrage, étant donné que le vitrage est également soumis, sur la face supérieure, aux mêmes endroits, à la même pression de soufflage ;

L'invention a pour but de développer un four à rouleaux pour le chauffage uniforme des deux surfaces de vitrages qui tire profit des avantages connus du chauffage par convection, sans que les vitrages se trouvant sur les rouleaux de transport ne soient soumis à un important risque de déformation sous l'effet de leur propre poids.

Ce but est atteint suivant l'invention par le fait qu'il est prévu, au-dessus de la voie de transport à rouleaux, des ailettes formant buses de soufflage disposées transversalement à la direction de déplacement des vitrages et destinées à souffler du gaz chaud, réalisant ainsi un chauffage par convection et, en dessous de la voie de transport à rouleaux, exclusivement des résistances chauffantes pour le chauffage de la surface inférieure du vitrage.

Un four a rouleaux conforme à l'invention non seulement contribue à améliorer considérablement la qualité optique des vitrages en rendant possible une succession proche des rouleaux de transport, mais en outre présente d'autres avantages essentiels. Par exemple, les coûts de fabrication d'un tel four sont nettement inférieurs aux coûts de fabrication des fours à convection connus, vu que le four présente, en dessous des rouleaux de transport, une construction nettement plus simple et une hauteur relativement faible. Les frais de montage du four conforme à l'invention sont également considérablement réduits, vu que, en raison de la faible hauteur de construction de l'infrastructure du four, une fosse n'est plus nécessaire dans le sol du bâtiment d'usine, mais que le four peut être monté au-dessus du niveau du sol sur une fondation appropriée ou sur une charpente de support appropriée. Les coûts d'investissement d'un four conforme à l'invention sont ainsi, dans l'ensemble, nettement plus avantageux que dans le cas du four à convection connu.

Selon un premier mode de réalisation, des ventilateurs, associés à des moteurs d'entraînement montés en dehors du four, sont fixés sur les parois latérales internes du four.

Selon un autre mode de réalisation, plus particulièrement adapté aux fours continus, les ventilateurs sont placés au niveau de la voûte, c'est-à-dire face et au-dessus du lit de rouleaux, et de préférence selon un axe médian parallèle au lit de rouleaux. Selon cette réalisation, la disposition plus symétrique des ventilateurs au sein du four conduit à une aspiration plus homogène et plus équilibrée au sein du four. De plus, les moteurs d'entraînement associés aux ventilateurs sont ainsi placés au-dessus du four, ce qui permet d'obtenir un encombrement plus réduit selon la largeur du four par rapport au premier mode de réalisation.

D'autre part, ce deuxième mode de réalisation de l'invention offre plus de place pour le positionnement de résistances dans les canaux conduisant le gaz. Il est ainsi possible de réchauffer le gaz sur une plus courte distance. Cet avantage peut permettre de créer un gradient de température contrôlé sur la longueur du four ; il est en effet possible, selon cette réalisation, d'alimenter directement les buses placées sous un ventilateur en maîtrisant la température, la température du gaz arrivant à l'ensemble des buses du four pouvant également être contrôlée. Un tel gradient de température sur la longueur du four peut notamment être recherché dans le cas de fours continus.

Un exemple de réalisation d'un four conforme à l'invention sera décrit plus en détail ci-après avec référence aux dessins, dans lesquels :

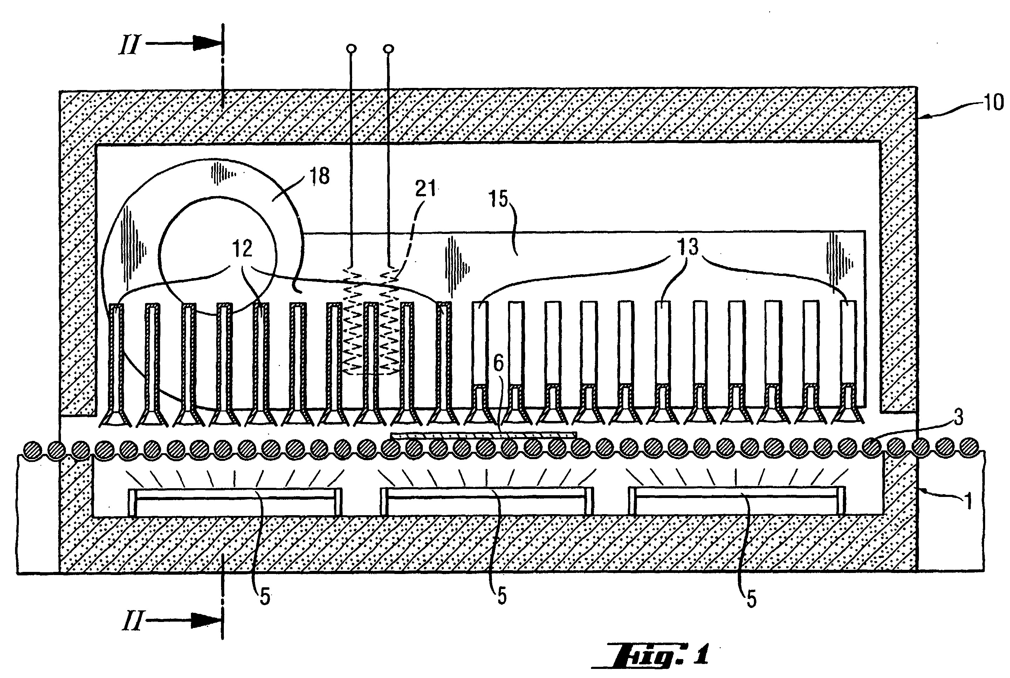

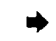 **Figure 1** : est une vue en coupe longitudinale verticale d'un four à rouleaux conforme à l'invention,

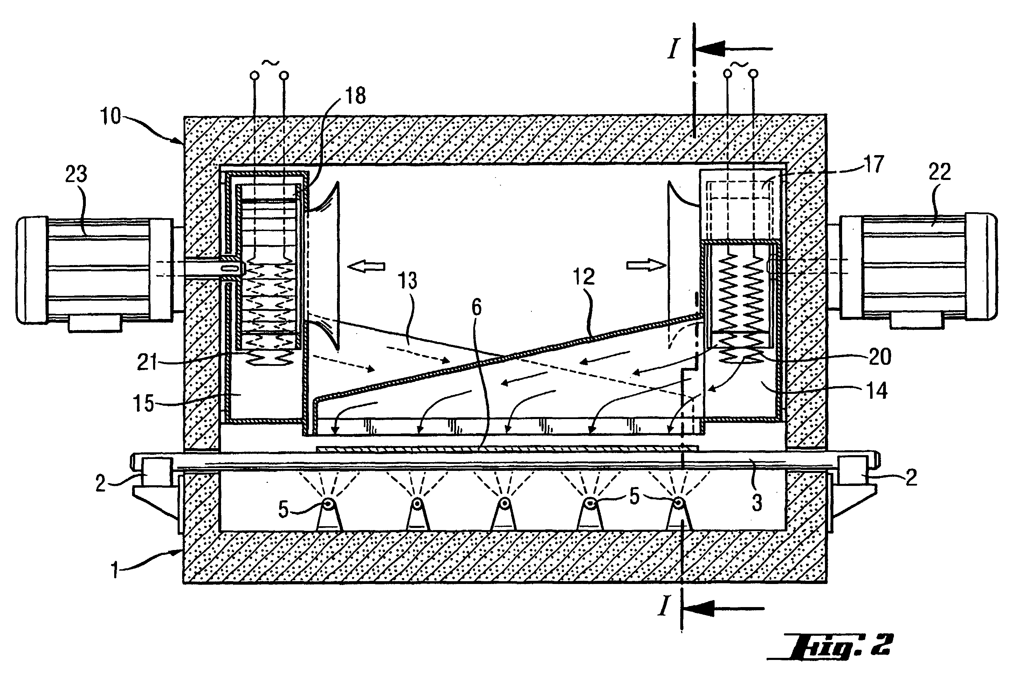

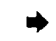 **Figure 2** : est une vue en coupe suivant la ligne II-II de la figure 1.

Vu qu'aussi bien la construction des fours à convection que celle des fours à rayonnement sont en principe connues, il n'est pas nécessaire de s'étendre davantage sur les détails de construction d'un four conforme à l'invention.

Comme cela ressort des dessins, un four à rouleaux conforme à l'invention comprend une partie inférieure 1 et une partie supérieure 10. Il est prévu, au niveau de la partie inférieure 1, à l'extérieur de la partie chauffée du four, des paliers 2 dans lesquels les rouleaux transporteurs entraînés 3 sont montés à une distance la plus petite possible l'un de l'autre. Les rouleaux transporteurs 3 sont entraînés à l'aide de dispositifs non représentés. Lorsque le four est prévu comme four continu, les rouleaux transporteurs 3 sont entraînés en continu dans le même sens de rotation. Des fours de plus faible capacité sont souvent pourvus d'un dispositif d'entraînement de rouleaux à sens de rotation alternants, de sorte que les vitrages présents dans le four effectuent un mouvement oscillant et que le four peut présenter ainsi une longueur de construction nettement plus courte.

Des résistances électriques chauffantes 5, par exemple sous la forme de filaments hélicoïdaux, sont disposées en nombre requis dans la partie inférieure 1 du four. Grâce à ces résistances électriques 5, la face inférieure du vitrage 6 est chauffée uniquement par l'énergie de rayonnement, et ce, en partie, directement par le rayonnement direct qui touche directement le vitrage entre les rouleaux transporteurs entraînés 3, mais surtout par le rayonnement secondaire émanant des rouleaux transporteurs 3 chauffés, et par le contact direct du vitrage avec les rouleaux transporteurs entraînés 3.

Par contre, dans la partie supérieure 10 du four, la face supérieure du vitrage 6 est chauffée exclusivement par convection, du fait que du gaz chaud est soufflé sur le vitrage. A cet effet, des ailettes formant buses de soufflage 12, 13 sont disposées sur toute la longueur du four transversalement à la direction de transport des vitrages, c'est-à-dire parallèlement aux rouleaux transporteurs entraînés 3, et sont alimentées en air chauffé à une température d'environ 650 à 700°C par des canaux de distribution 14 et 15.

Afin de réaliser un brassage efficace de l'air chaud et d'atteindre ainsi une température uniforme, deux groupes d'ailettes formant buses de soufflage 12 et 13 sont disposés dans la direction longitudinale du four. Alors que les ailettes formant buses de soufflage 12 sont alimentées en air chaud par le canal de distribution 14 grâce à un ventilateur 17 disposé à proximité de l'extrémité arrière du four à l'intérieur de la partie chauffée du four, les ailettes formant buses de soufflage 13 sont alimentées en air chaud par le canal de distribution 15 et un ventilateur 18 qui, pour sa part, est disposé du côté du four opposé au ventilateur 17 et à proximité de l'extrémité avant du four.

Le chauffage à l'air à lieu à l'intérieur des canaux de distribution 14 et 15 par des résistances de chauffage appropriées 20, 21. Les moteurs d'entraînement 22, 23 pour les ventilateurs 17, 18 sont bien entendu situés à l'extérieur de la partie chauffée du four. Des ventilateurs radiaux, tels que ceux représentés dans les dessins, conviennent aussi bien que des ventilateurs à courant transversal. Lors de l'utilisation de ventilateurs à courant transversal, l'arrangement doit correspondre essentiellement à celui décrit dans le document DE 43 36 364 A1.

Bien entendu, le four comprend en outre les dispositifs habituels pour la commande et le réglage des résistances électriques 5, 20, 21 et des ventilateurs 17, 18, afin de garantir un chauffage le plus uniforme possible des vitrages, conformément aux exigences respectives. Les dispositifs de commande et de réglage sont conçus avantageusement de telle sorte qu'il soient indépendants l'un de l'autre afin de permettre également, selon les exigences posées, une attaque différente au moyen de l'énergie calorifique de la face supérieure et de la face inférieure des vitrages.

## Revendications

1. Four à rouleaux pour le chauffage de vitrages (6) à leur température de ramollissement, comprenant au-dessus de la voie de transport à rouleaux, des ailettes formant buses de soufflage (12, 13) disposées transversalement à la direction de déplacement des vitrages (6) et destinées à souffler un gaz chaud sur la surface supérieure du vitrage, réalisant ainsi un chauffage par convection de cette surface supérieure, **caractérisé en ce qu'**il comprend en dessous de la voie de transport à rouleaux, exclusivement des résistances chauffantes (5) pour le chauffage de la surface inférieure du vitrage.

2. Four à rouleaux suivant la revendication précédente, **caractérisé en ce que** les ailettes formant buses de soufflage (12,13) sont alimentées en air chaud par des ventilateurs (17, 18) entrainés par des moteurs d'entrainement (22, 23) , les résistances chauffantes (5) et les moteurs d'entraînement (22, 23) étant pourvus de dispositifs de commande et de réglage qui permettent une attaque différente au moyen d'énergie calorifique de la face supérieure et de la face inférieure des vitrages (6).

3. Four à rouleaux selon la revendication 1 ou 2, **caractérisé en ce que** les ventilateurs assurant le chauffage par convection sont positionnés sur les parois latérales du four.

4. Four à rouleaux selon la revendication 1 ou 2, **caractérisé en ce que** les ventilateurs assurant le chauffage par convection sont positionnés au niveau de la voùte du four.

5. Four à rouleaux selon l'une des revendications précédentes, **caractérisé en ce qu'**il comprend au dessus de la voie de transport à rouleau, exclusivement des ailettes formant buses de soufflage pour le chauffage de la surface supérieure du vitrage.

## Patentansprüche

1. Rollenofen für die Erwärmung von Glasscheiben (6) auf ihre Erweichungs-Temperatur, mit oberhalb der Rollenbahn quer zur Bewegungsrichtung der Glasscheiben (6) angeordneten Düsenrippen (12,13) zum Aufblasen von heißem Gas auf die Oberseite der Glasscheibe, um so eine Erwärmung dieser Oberseite durch Konvektion zu verwirklichen, **dadurch gekennzeichnet, dass** er unterhalb der Rollenbahn ausschließlich Heizwiderstände (5) für die Erwärmung der Unterseite der Glasscheiben enthält.

2. Rollenofen nach vorhergehendem Anspruch, **dadurch gekennzeichnet, dass** die Düsenrippen (12, 13) durch von Antriebsmotoren (22, 23) angetriebene Ventilatoren (17, 18) mit heißer Luft versorgt werden, wobei die Heizwiderstände (5) und die Antriebsmotoren (22, 23) mit Steuer- und Regeleinrichtungen versehen sind, die eine unterschiedliche Beaufschlagung der Oberseite und der Unterseite der Glasscheiben (6) mit Wärmeenergie ermöglichen.

3. Rollenofen nach Anspruch 1 oder 2, **dadurch gekennzeichnet, dass** die Ventilatoren, die die Erwärmung durch Konvektion sicherstellen, an den Seitenwänden des Ofens positioniert sind.

4. Rollenofen nach Anspruch 1 oder 2, **dadurch gekennzeichnet, dass** die Ventilatoren, die die Erwärmung durch Konvektion sicherstellen, auf der Höhe der Ofenwölbung positioniert sind.

5. Rollenofen nach einem der vorhergehenden Ansprüche, **dadurch gekennzeichnet, dass** er oberhalb der Rollenbahn ausschließlich Düsenrippen für die Erwärmung der Oberseite der Glasscheibe enthält.

## Claims

1. Roller oven for heating glass panes (6) to their softening temperature, comprising, above the roller conveyer track, fins forming blowing nozzles (12, 13) disposed transversely to the direction of movement of the glazing panes (6) and intended to blow a hot gas onto the top surface of the glazing pane, thus effecting a heating of this top surface by convection, **characterised in that** it comprises, below the roller conveyer track, solely heating elements (5) for heating the bottom surface of the glazing pane.

2. Roller oven according to the preceding claim, **characterised in that** the fins forming blowing nozzles (12, 13) are supplied with hot air by fans (17, 18) driven by drive motors (22, 23), the heating elements (5) and the drive motors (22, 23) being provided with control and regulation devices which allow a different action, by means of heat energy, on the top face and the bottom face of the glazing panes (6).

3. Roller oven according to Claim 1 or 2, **characterised in that** the fans providing the heating by convection are positioned on the side walls of the oven.

4. Roller oven according to Claim 1 or 2, **characterised in that** the fans providing the heating by convection are positioned at the roof of the oven.

5. Roller oven according to one of the preceding claims, **characterised in that** it comprises, above the roller conveyer track, solely fins forming blowing nozzles for heating the top surface of the glazing pane.
